# EUROPEAN PATENT APPLICATION

(11) **EP 4 822 951 A1**
(43) Date of publication of application: **14.10.2026**
(21) Application number: 24920259.9
(22) Date of filing: 02.10.2024
(51) Int. Cl.: H02K 1/276

(54) **ROTATING ELECTRIC MACHINE**

(30) Priority: 24.01.2024 JP 2024008565
(71) Applicant: Hitachi, Ltd., Tokyo 100-8280 (JP)
(72) Inventor: NAKATSUGAWA Junnosuke, Tokyo 100-8280 (JP); TAKAHATA Ryouichi, Tokyo 100-8280 (JP); ITO Makoto, Tokyo 100-8280 (JP); ENOMOTO Yuji, Tokyo 100-8280 (JP); WANG Zhi, Tokyo 100-8280 (JP)
(74) Representative: Manitz Finsterwald Patent- und Rechtsanwaltspartnerschaft mbB
(86) International application number: PCT/JP2024/035236
(87) International publication number: WO 2025/158711

(57) **Abstract**

The purpose of the present invention is, in a rotating electric machine having a multipolar Halbach magnet arrangement, to suppress an increase in eddy current loss of a permanent magnet, to suppress an increase in temperature of the permanent magnet, and to hardly cause irreversible demagnetization. The rotating electric machine according to the present invention comprises: a stator in which a coil is wound around a stator core; and a rotor which faces the stator via a predetermined gap and in which a spoke magnet 211 magnetized in the circumferential direction and a main pole magnet magnetized in the radial direction are embedded in a rotor core. The spoke magnet 211 and the main pole magnet 212 are respectively divided into a plurality of magnet pieces 2111, 2121 in at least one direction of the axial direction, circumferential direction, and radial direction of the rotor, and the length A of the magnet piece 2111 of the spoke magnet 211 in the division direction is shorter than the length of the magnet piece 2121 of the main pole magnet 212 in the division direction.

## Description

### Technical Field

The present invention relates to a rotating electric machine.

### Background Art

In recent years, in line with the trend toward reduction of CO₂, CO₂ emission regulations have been strongly demanded in various countries toward realization of a zero-carbon society. As an alternative to an engine that uses fossil fuel emitting CO₂, electrification that does not emit CO₂ during operation of a powertrain has been actively promoted. Particularly, in an air mobility field such as aircraft and eVTOL (electric vertical takeoff and landing aircraft), higher output and higher torque of a rotating electric machine such as an electric motor and a generator while reducing weight of the rotating electric machine, that is, higher output density and higher torque density, have been required in order to increase range and increase payload. As a method for reducing weight of a rotating electric machine, a technique is known in which the number of poles of the rotating electric machine is increased and a stator and a rotor are made thinner in the radial direction. As a method for increasing torque, a Halbach magnet arrangement is known in which a main pole magnet arranged on a d-axis of a rotor and a spoke magnet arranged on a q-axis are combined. As a method for increasing output, a method is known in which rotational speed of a rotating electric machine is increased to improve wattage.

For example, PTL 1 describes a technique of a rotating electric machine that has reduced weight by increasing the number of poles and reducing thickness in the radial direction and that has increased torque by a Halbach magnet arrangement.

### Citation List

### Patent Literature

PTL 1: WO 2023/286606

### Summary of Invention

### Technical Problem

When rotational speed is increased in order to increase output of the rotating electric machine of PTL 1, a fundamental wave frequency of current increases because the rotating electric machine has multiple poles, and iron loss of a core and eddy current loss of a magnet increase. In particular, there has been a problem in that, when eddy current loss of a permanent magnet arranged in a rotor increases, temperature of the permanent magnet rises and irreversible demagnetization tends to occur.

The purpose of the present invention is, in a rotating electric machine having a multipolar Halbach magnet arrangement, to suppress an increase in eddy current loss of a permanent magnet, to suppress an increase in temperature of the permanent magnet, and to hardly cause irreversible demagnetization.

### Solution to Problem

To achieve the above object, the rotating electric machine according to the present invention is a rotating electric machine including
a stator in which a coil is wound around a stator core; and a rotor that faces the stator via a predetermined gap and in which a spoke magnet magnetized in a circumferential direction and a main pole magnet magnetized in a radial direction are embedded in a rotor core,
wherein the spoke magnet and the main pole magnet are respectively divided into a plurality of magnet pieces in at least one direction of an axial direction, the circumferential direction, and the radial direction of the rotor, and
a length of the magnet piece of the spoke magnet in a division direction is shorter than a length of the magnet piece of the main pole magnet in the division direction.

Other aspects of the present invention will be described in an embodiment given below.

### Advantageous Effects of Invention

According to the present invention, in a rotating electric machine having a multipolar Halbach magnet arrangement, an increase in eddy current loss of a permanent magnet can be suppressed, an increase in temperature of the permanent magnet can be suppressed, and irreversible demagnetization can be made less likely to occur.

### Brief Description of Drawings

[FIG. 1] FIG. 1 is a sectional view of a rotating electric machine 100 according to a first example.
[FIG. 2] FIG. 2 is a sectional view of a stator 1 and a rotor 2 of the rotating electric machine 100 according to the first example.
[FIG. 3] FIG. 3 is a perspective view of a permanent magnet 21 of the rotating electric machine 100 according to the first example.
[FIG. 4] FIG. 4 is a distribution of eddy current vectors flowing in the permanent magnet 21 of the rotating electric machine 100 according to the first example.
[FIG. 5] FIG. 5 is a distribution of eddy current vectors flowing in a permanent magnet 21 of the rotating electric machine in a comparative example.
[FIG. 6] FIG. 6 is a comparison of eddy current loss generated in the permanent magnets 21 of the rotating electric machines in the first example and the comparative example.
[FIG. 7] FIG. 7 is a perspective view of a permanent magnet 21 of a rotating electric machine 100 according to a second example.
[FIG. 8] FIG. 8 is a perspective view of a permanent magnet 21 of a rotating electric machine 100 according to a third example.
[FIG. 9] FIG. 9 is a perspective view of a permanent magnet 21 of a rotating electric machine 100 according to a fourth example.
[FIG. 10] FIG. 10 is a perspective view of a permanent magnet 21 of a rotating electric machine 100 according to a fifth example.
[FIG. 11] FIG. 11 is a sectional view of a stator 1 and a rotor 2 of a rotating electric machine 100 according to a sixth example.

### Description of Embodiments

Hereinafter, an embodiment of the present invention will be described in detail with reference to the accompanying drawings. In a plurality of embodiments and modifications of the embodiments, similar constituent elements are denoted by the same reference signs, and duplicate description is omitted.

### [Example 1]

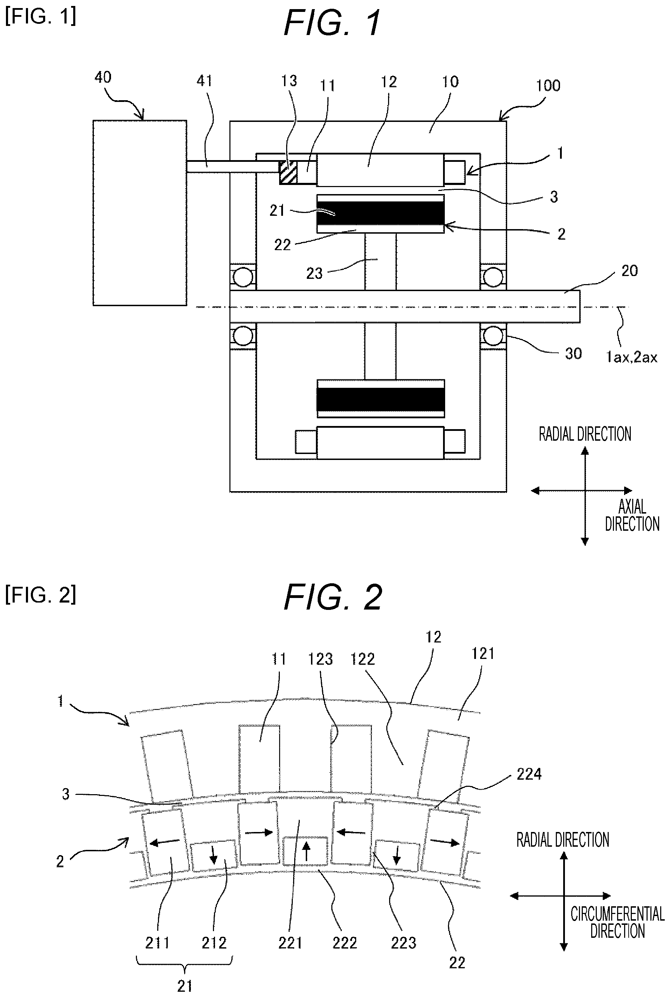

With reference to FIGS. 1 to 6, a rotating electric machine according to a first example of the present invention will be described. FIG. 1 is a sectional view of a rotating electric machine 100 according to the first example.

### [Configuration of Rotating Electric Machine 100]

As illustrated in FIG. 1, the rotating electric machine 100 includes a stator 1, a rotor 2 arranged on an inner circumferential side of a stator 1 via an air gap (gap) 3, a housing 10 that holds the stator 1, a shaft 20 that holds the rotor 2, and a bearing 30 that holds the shaft 20 while allowing the shaft 20 to rotate with respect to the housing 10. The rotor 2 is provided with a permanent magnet 21 serving as a field magnetic pole, a rotor core 22 that holds the permanent magnet 21, and a cylindrical rotor core holding portion 23. The shaft 20 is fixed to a through hole of the rotor core holding portion 23 by press fitting or shrink fitting. The stator 1 is provided with a coil 11 and a stator core 12, and a lead wire 41 extending from an inverter 40 enters the rotating electric machine 100 and is connected to the coil 11 via a connection portion 13. Three-phase alternating current is supplied from the inverter 40 to the coil 11 to form a rotating magnetic field, and torque is generated by interaction with the permanent magnet 21 serving as the field magnetic pole of the rotor 2. The configuration of the rotating electric machine 100 described above is also commonly applied to examples described later. The rotating electric machine 100 according to the present invention is applicable to both an inner rotor type in which the rotor 2 is rotatably supported on the inner circumferential side of the stator 1 and an outer rotor type in which the rotor 2 is rotatably supported on the outer circumferential side of the stator 1.

### <Configuration of Stator 1 and Rotor 2>

FIG. 2 is a sectional view of the stator 1 and the rotor 2 according to the first example. FIG. 2 illustrates a cross section perpendicular to a rotation axis.

The stator 1 includes a stator core 12 configured by laminating a plurality of core sheets and having a central axis line 1ax (see FIG. 1) coinciding with a rotation axis 2ax (see FIG. 1) of the rotor 2, and the coil 11 configured by winding a conductor wire of copper or aluminum. In the present specification, a direction along the rotation axis 2ax and the central axis line 1ax is referred to as an "axial direction", a rotational direction centered on the axial direction is referred to as a "circumferential direction", and a direction orthogonal to the rotation axis 2ax and the central axis line 1ax is referred to as a "radial direction".

The stator core 12 includes an annular stator back yoke 121, a plurality of teeth 122 connected to the stator back yoke 121 and provided on a radial air gap 3 side, and slots 123 provided between circumferentially adjacent teeth 122. The coil 11 is wound around the teeth 122 and housed in the slots 123. The stator core 12 may be configured by an integrally molded solid member. The stator core 12 may also have a configuration in which a powder magnetic body such as a soft magnetic composite is compression molded, or may be configured by amorphous metal or a nanocrystalline material.

The rotor 2 includes the rotor core 22 and the permanent magnet 21 inserted into a magnet hole formed in the rotor core 22. The rotor core 22 is configured by laminating a plurality of core sheets. The rotor core 22 may be configured by an integrally molded solid member. The rotor core 22 may also have a configuration in which a powder magnetic body such as a soft magnetic composite is compression molded, or may be configured by amorphous metal or a nanocrystalline material. The permanent magnet 21 includes a spoke magnet 211 and a main pole magnet 212. The spoke magnet 211 has a cross section elongated in the radial direction and is magnetized in the circumferential direction. The main pole magnet 212 has a cross section elongated in the circumferential direction and is magnetized in the radial direction. In FIG. 2, magnetization directions of the spoke magnet 211 and the main pole magnet 212 are indicated by arrows.

The main pole magnet 212 is arranged at a position radially farther from the air gap 3 than the spoke magnet 211. The permanent magnet 21 is configured by a rare-earth sintered magnet. In the rotor core 22, a region located on the radial air gap 3 side of the main pole magnet 212 is referred to as a main core 221, and a region located on a side opposite to the air gap 3 in the radial direction with respect to the main pole magnet 212 is referred to as a back core 222.

The back core 222 has a role of forming a path of magnetic flux from one pole of the rotor 2 to a circumferentially adjacent pole and a role of improving mechanical strength of the rotor core 22. The main core 221 functions to increase a gap magnetic flux density by concentrating magnetic flux of the main pole magnet 212 and magnetic flux of the spoke magnet 211. As a result, torque density of the rotating electric machine 100 can be increased.

An intermagnet bridge 223, which is a narrow portion of the rotor core 22, is formed between the spoke magnet 211 and the main pole magnet 212. Since the intermagnet bridge 223 becomes a path of leakage magnetic flux that short-circuits magnetic flux of the permanent magnet, a circumferential width is preferably formed small. On the other hand, the intermagnet bridge 223 is also a portion in which large stress is generated by loads of centrifugal force and electromagnetic force acting on the rotor 2. For this reason, in design of the intermagnet bridge 223, a width of the intermagnet bridge 223 is determined by a balance between magnetic characteristics such as torque and mechanical strength.

Further, between the spoke magnet 211 and the air gap 3, a claw portion 224 extending in the circumferential direction from a tip of the main core 221 on the air gap 3 side is formed. The claw portion 224 has a role of preventing the spoke magnet 211 from scattering from the rotor core 22 due to loads of centrifugal force and electromagnetic force. On the other hand, since the claw portion 224 becomes a path of leakage magnetic flux that short-circuits magnetic flux generated from the permanent magnet 21, a radial width is preferably small, and the claw portion 224 is preferably spaced apart from a circumferentially adjacent claw portion 224. For this reason, in design of the claw portion 224, a width and a circumferential length of the claw portion 224 are determined by a balance between magnetic characteristics such as torque and mechanical strength.

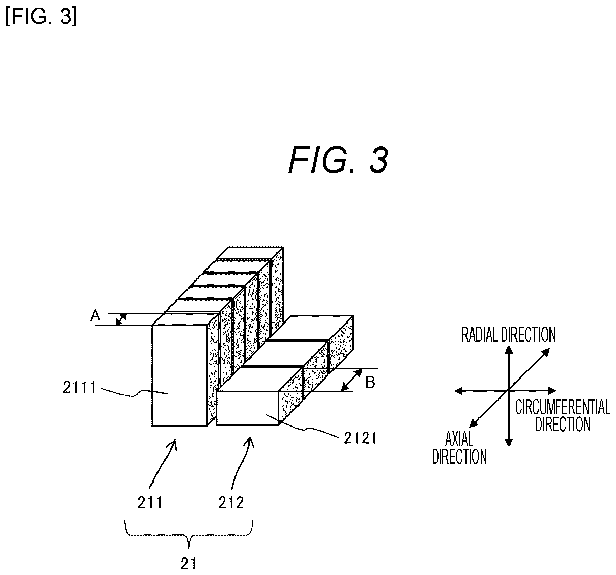

FIG. 3 is a perspective view of the permanent magnet 21 of the rotating electric machine 100 according to the first example.

The spoke magnet 211 is divided into a plurality of spoke magnet pieces 2111 in the axial direction, and the spoke magnet pieces 2111 are bonded to one another via an adhesive. The main pole magnet 212 is divided into a plurality of main pole magnet pieces 2121 in the axial direction, and the main pole magnet pieces 2121 are bonded to one another via an adhesive. Here, assuming that an axial length of the spoke magnet piece 2111 is A and an axial length of the main pole magnet piece 2121 is B, the following relationship holds between A and B.$A < B$ (1)

That is, the axial length A of the divided spoke magnet piece 2111 is shorter than the axial length B of the main pole magnet piece 2121.

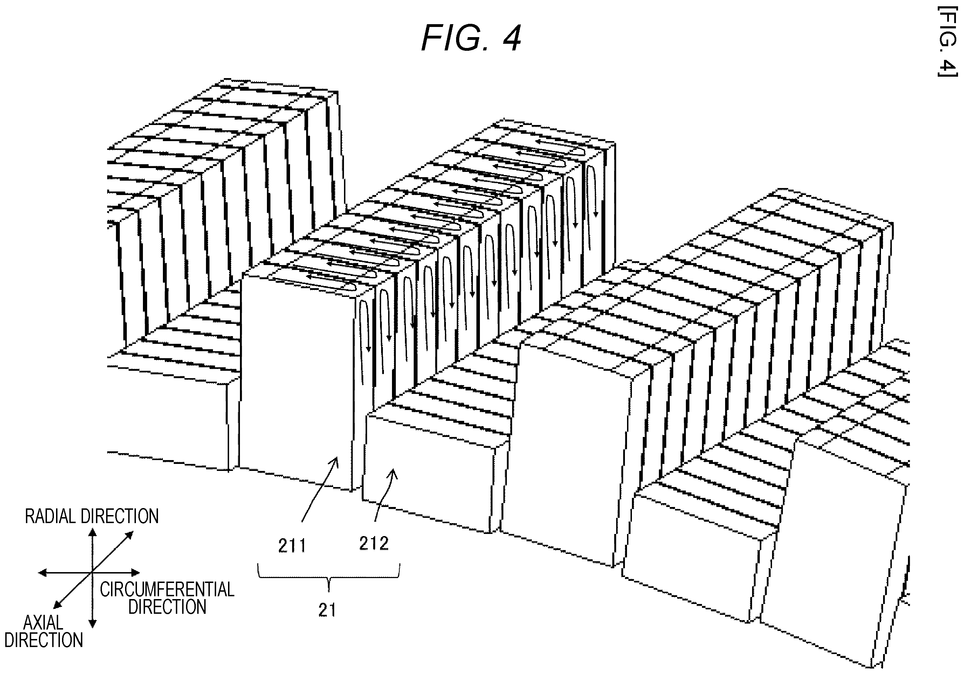

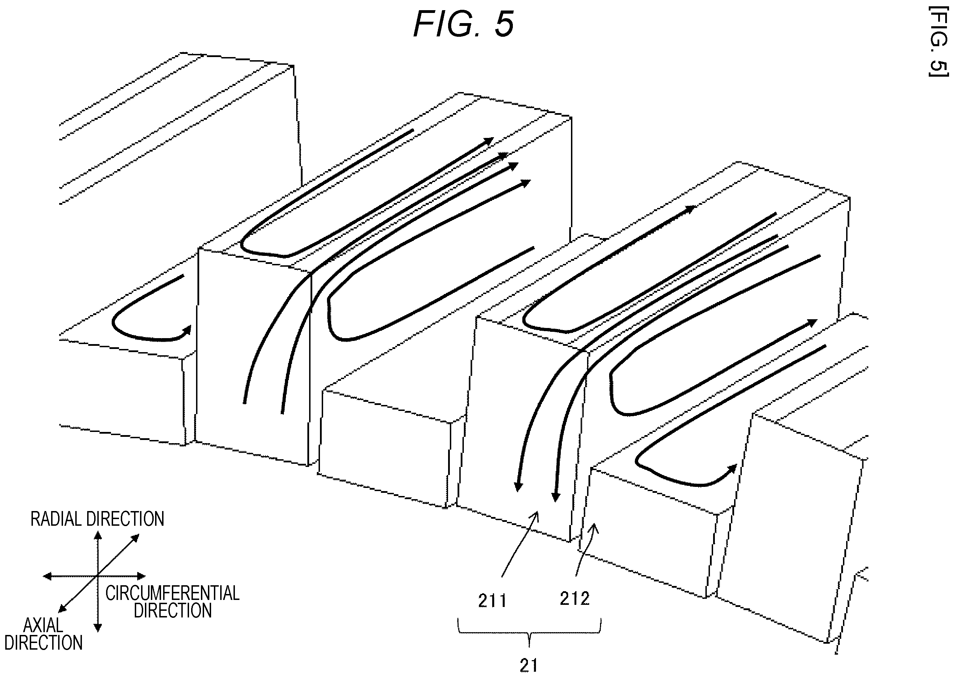

FIG. 4 is a distribution of eddy current vectors flowing in the permanent magnet 21 of the rotating electric machine 100 according to the first example. FIG. 5 is a distribution of eddy current vectors flowing in the permanent magnet 21 of the rotating electric machine in the comparative example.

In a comparative example, eddy current flows as indicated by arrows in FIG. 5. In this case, in the comparative example, more eddy current flows in the spoke magnet 211 than in the main pole magnet 212. In particular, a large eddy current loop is formed in the axial direction of the spoke magnet 211, and particularly large eddy current flows at a corner portion of an upper radial portion near the air gap.

On the other hand, in FIG. 4 in which the permanent magnet 21 is divided in the axial direction, since the adhesive is interposed between the divided spoke magnet pieces 2111, each of the divided spoke magnet pieces 2111 is electrically insulated. Therefore, an eddy current loop is closed within each spoke magnet piece 2111, electrical resistance to the eddy current loop increases as compared with a case with no division, and eddy current is greatly reduced.

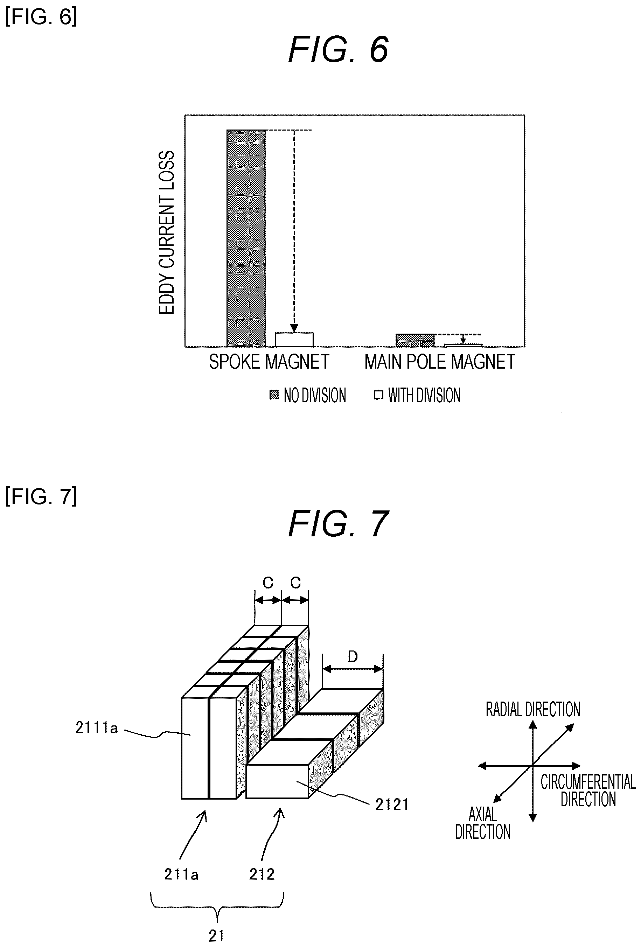

FIG. 6 is a comparison of eddy current loss generated in the permanent magnet 21 of the rotating electric machine in the first example and the comparative example.

When the main pole magnet 212 and the spoke magnet 211 are not divided, eddy current loss is larger in the spoke magnet 211 than in the main pole magnet 212, and particularly eddy current loss of the spoke magnet 211 is dominant, and therefore, by making the axial length A of the spoke magnet piece 2111 smaller than the axial length B of the main pole magnet piece 2121, large eddy current loss dominantly generated in the spoke magnet 211 can be effectively reduced.

On the other hand, since eddy current loss of the main pole magnet 212 is relatively small, there is no need to make the axial length B as small as in the spoke magnet 211.

As a result, by reducing with emphasis particularly eddy current loss generated in a plane along the axial direction of the spoke magnet 211, an increase in temperature of the permanent magnet 21 caused by the eddy current loss can be suppressed, torque characteristics of the rotating electric machine 100 can be improved, and irreversible demagnetization of the permanent magnet 21 can be suppressed.

### [Example 2]

With reference to FIG. 7, a rotating electric machine 100 according to a second example of the present invention will be described. The second example can be configured similarly to the first example except for points described below. Differences from the first example will be mainly described below.

FIG. 7 is a perspective view of a permanent magnet 21 of the rotating electric machine 100 according to the second example.

In the present example, a spoke magnet 211a is divided into a plurality of spoke magnet pieces 2111a in the circumferential direction, and the plurality of spoke magnet pieces 2111a are bonded via an adhesive. Since the adhesive is interposed between the divided spoke magnet pieces 2111a, each of the divided spoke magnet pieces 2111a is electrically insulated. Here, assuming that a circumferential length of the spoke magnet piece 2111a is C and a circumferential length of a main pole magnet 212 is D, the following relationship holds between C and D.$C < D$ (2)

That is, the circumferential length C of the divided spoke magnet piece 2111a is shorter than the circumferential length D of the main pole magnet 212.

By making the circumferential length C of the spoke magnet piece 2111a smaller than the circumferential length D of the main pole magnet 212, eddy current loss generated in the spoke magnet 211a can be effectively reduced.

On the other hand, since eddy current loss of the main pole magnet 212 is relatively small, there is no need to make the circumferential length D as small as the spoke magnet piece 2111a of the spoke magnet 211.

As a result, by reducing with emphasis particularly eddy current loss generated in a plane along the circumferential direction and the radial direction of the spoke magnet 211, an increase in temperature of the permanent magnet 21 caused by the eddy current loss can be suppressed, torque characteristics of the rotating electric machine 100 can be improved, and irreversible demagnetization of the permanent magnet 21 can be suppressed.

In the present example, similarly to the first example, the spoke magnet 211 and the main pole magnet 212 are divided into a plurality of magnet pieces in the axial direction, but division may be performed only in the circumferential direction without division in the axial direction.

### [Example 3]

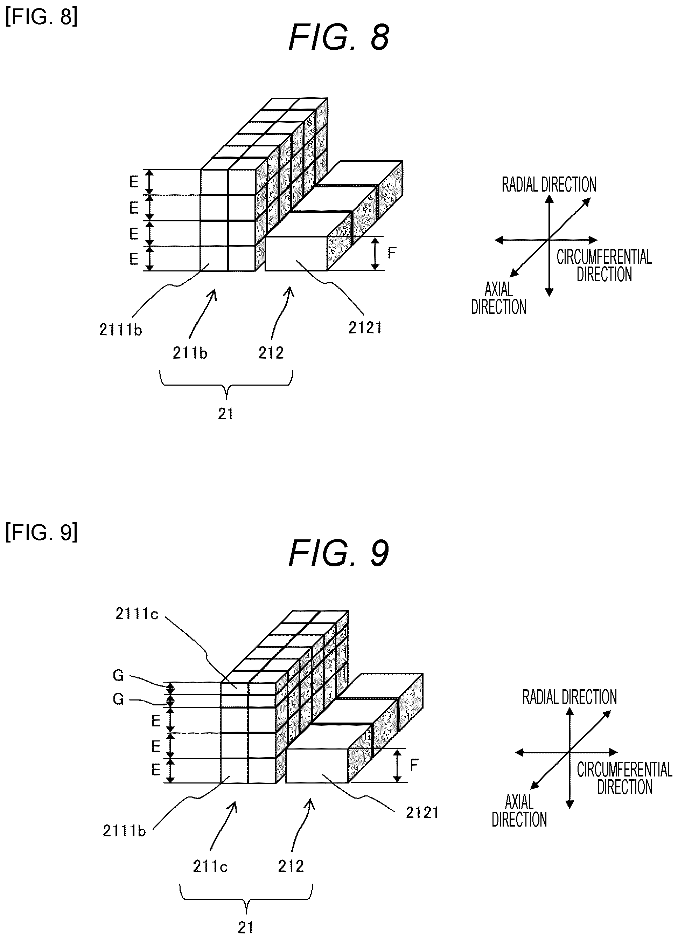

With reference to FIG. 8, the rotating electric machine 100 according to a third example of the present invention will be described. The third example can be configured similarly to the first example and the second example except for the following points. Differences from the first example and the second example will be mainly described below.

FIG. 8 is a perspective view of a permanent magnet 21 of a rotating electric machine 100 according to the third example.

In the present example, a spoke magnet 211b is, relative to the spoke magnet 211a of the second example, divided into a plurality of spoke magnet pieces 2111b in the radial direction, and the spoke magnet pieces 2111b divided in the radial direction and the circumferential direction are bonded via an adhesive. That is, in the present example, the spoke magnet piece 2111a of the second example divided in the circumferential direction is further divided in the radial direction. Since the adhesive is interposed between the divided spoke magnet pieces 2111b, each of the divided spoke magnet pieces 2111b is electrically insulated. Here, assuming that a radial length of the spoke magnet piece 2111b is E and a radial length of a main pole magnet 212 is F, the following relationship holds between E and F.$E < F$ (3)

That is, the radial length E of the divided spoke magnet piece 2111b is shorter than the radial length F of the main pole magnet 212.

By making the radial length E of the spoke magnet piece 2111b smaller than the radial length F of the main pole magnet 212, eddy current loss generated in the spoke magnet 211b can be effectively reduced.

On the other hand, since eddy current loss of the main pole magnet 212 is relatively small, there is no need to make the radial length F as small as the spoke magnet piece 2111b of the spoke magnet 211.

As a result, by reducing with emphasis particularly eddy current loss generated in a plane along the circumferential direction and the radial direction of the spoke magnet 211b, an increase in temperature of the permanent magnet 21 caused by the eddy current loss can be suppressed, torque characteristics of the rotating electric machine 100 can be improved, and irreversible demagnetization of the permanent magnet 21 can be suppressed. Particularly, the spoke magnet 211b of the present example is divided, relative to the spoke magnet 211a of the second example, so that the radial length becomes smaller, and therefore eddy current generated in a plane along the circumferential direction and the radial direction can be reduced.

In the present example, similarly to the first example, the spoke magnet 211 and the main pole magnet 212 are divided into the plurality of magnet pieces in the axial direction, and similarly to the second example, the spoke magnet 211 is divided into the plurality of magnet pieces in the circumferential direction, but division may be performed only in the radial direction without division in the axial direction and the circumferential direction. Alternatively, the spoke magnet 211 may be divided into a plurality of magnet pieces in the radial direction and may also be divided in either the axial direction or the circumferential direction.

### [Example 4]

With reference to FIG. 9, a rotating electric machine 100 according to a fourth example of the present invention will be described. The fourth example can be configured similarly to the first to third examples except for the following points. Differences from the first to third examples will be mainly described below.

FIG. 9 is a perspective view of a permanent magnet 21 of the rotating electric machine 100 according to the fourth example.

In the present example, a spoke magnet 211c is, relative to the spoke magnet 211a of the second example, divided into a plurality of spoke magnet pieces (first spoke magnet pieces) 2111b and a plurality of spoke magnet pieces (second spoke magnet pieces) 2111c in the radial direction, and the spoke magnet pieces 2111b and the spoke magnet pieces 2111c divided in the radial direction and the circumferential direction, respectively, are bonded via an adhesive. Here, the spoke magnet piece 2111c is located on a radial air gap side, and a radial length of the spoke magnet piece 2111c is G, and the spoke magnet piece 2111b is located on a side opposite to an air gap 3 (see FIG. 2) in the radial direction, and a radial length of the spoke magnet piece 2111b is E, and the following relationship holds between G and E. That is, the radial length of the spoke magnet piece 2111c located on the side of the air gap 3 in the radial direction is smaller than the radial length of the spoke magnet piece 2111b located on the side opposite to the air gap in the radial direction.$G < E$ (4)

That is, in the present example, the spoke magnet piece 2111c is such that the spoke magnet piece 2111b of the third example is divided on the radial air gap 3 side into a plurality of portions in the radial direction more finely than the spoke magnet piece 2111b. For this reason, the spoke magnet 211c of the present example is divided into the plurality of spoke magnet pieces 2111b and the plurality of spoke magnet pieces 2111c in the radial direction so that the radial length G of the spoke magnet piece 2111c on a radial inner peripheral side becomes smaller than the radial length E of the spoke magnet piece 2111b on a radial outer peripheral side.

In other words, the spoke magnet 211c is divided in the radial direction into the first spoke magnet piece 2111b and the second spoke magnet piece 2111c having different radial lengths, and the second spoke magnet piece 2111c is arranged on a radial inner peripheral side with respect to the first spoke magnet piece 2111b and is divided so that the radial length G becomes smaller than the radial length E of the first spoke magnet piece 2111b.

By making the radial length of the spoke magnet piece 2111c located on the radial air gap side smaller than the radial length of the spoke magnet piece 2111d located on the side opposite to the air gap in the radial direction, eddy current loss of the spoke magnet 211c largely generated on the radial air gap 3 side can be effectively reduced.

On the other hand, since eddy current loss of the spoke magnet piece 2111b located on the side opposite to the air gap 3 in the radial direction is relatively small, there is no need to make the radial length E as small as the spoke magnet piece 2111c located on the radial air gap 3 side.

As a result, by reducing with emphasis particularly eddy current loss generated in a plane along the circumferential direction and the radial direction of the spoke magnet 211c, an increase in temperature of a permanent magnet 21 caused by the eddy current loss can be suppressed, torque characteristics of the rotating electric machine can be improved, and irreversible demagnetization of the permanent magnet 21 can be suppressed. Particularly, the spoke magnet 211c of the present example is divided, relative to the spoke magnet 211b of the third example, so that the radial length becomes smaller on the radial air gap 3 side, and therefore eddy current generated in a plane along the circumferential direction and the radial direction on the radial air gap 3 side can be reduced.

In the present example, similarly to the first example, the spoke magnet 211 and a main pole magnet 212 are divided into the plurality of magnet pieces in the axial direction, and similarly to the second example, the spoke magnet 211 is divided into the plurality of magnet pieces in the circumferential direction, but division may be performed only in the radial direction without division in the axial direction and the circumferential direction. Alternatively, the spoke magnet 211 may be divided into a plurality of magnet pieces in the radial direction and may also be divided in either the axial direction or the circumferential direction. Alternatively, the plurality of first spoke magnet pieces 2111b may be configured as an integral magnet piece without division, and only the second spoke magnet piece 2111c may be provided on the radial air gap 3 side.

### [Example 5]

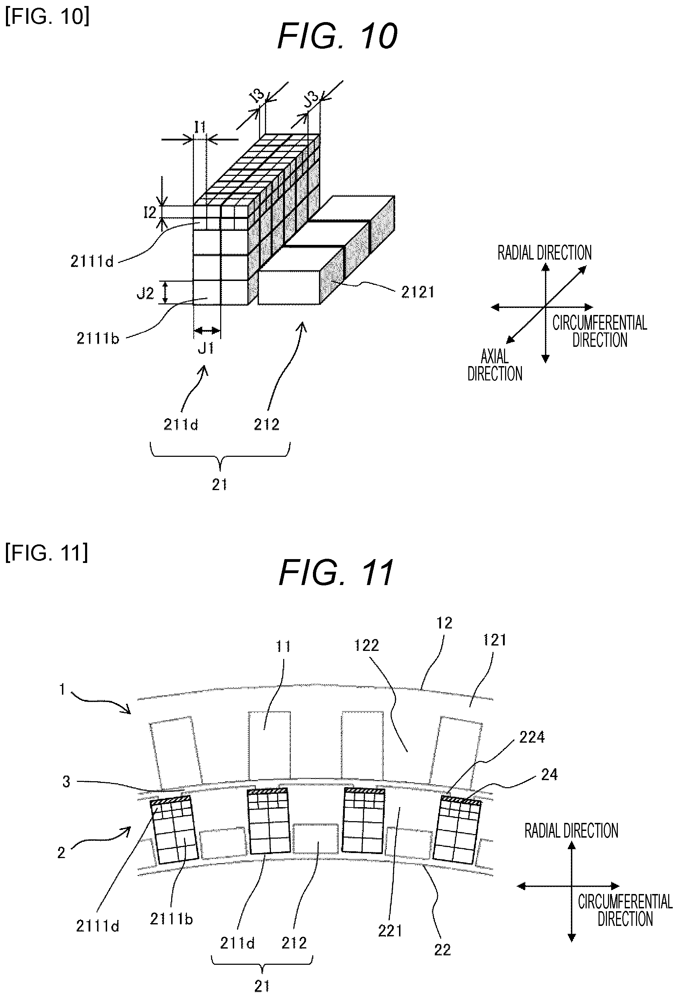

With reference to FIG. 10, a rotating electric machine 100 according to a fifth example of the present invention will be described. The fifth example can be configured similarly to the first to fourth examples except for the following points. Differences from the first to fourth examples will be mainly described below.

FIG. 10 is a perspective view of a permanent magnet 21 of a rotating electric machine 100 according to the fifth example.

In the present example, a spoke magnet 211d is, relative to the spoke magnet 211a of the second example, divided into a plurality of spoke magnet pieces (first spoke magnet pieces) 2111b and a plurality of spoke magnet pieces (second spoke magnet pieces) 2111d in the radial direction, and the spoke magnet pieces 2111d are further divided more finely than the spoke magnet pieces 2111b in each of the circumferential direction, the radial direction, and the axial direction. The spoke magnet pieces 2111b and the spoke magnet pieces 2111d divided in the radial direction and the circumferential direction, respectively, are bonded via an adhesive.

The spoke magnet piece 2111d is located on a radial air gap 3 (see FIG. 2) side with respect to the spoke magnet piece 2111b, and a circumferential length of the spoke magnet piece 2111d is I1, a radial length of the spoke magnet piece 2111d is I2, and an axial length of the spoke magnet piece 2111d is I3. The spoke magnet piece 2111b is located on a side opposite to the air gap 3 in the radial direction with respect to the spoke magnet piece 2111d, and a circumferential length of the spoke magnet piece 2111b is J1, a radial length of the spoke magnet piece 2111b is J2, and an axial length of the spoke magnet piece 2111b is J3. Here, the following relationships hold between I1, I2, I3 and J1, J2, J3. That is, each of the circumferential length I1, the radial length I2, and the axial length I3 of the spoke magnet piece 2111d located on the radial air gap 3 side is shorter than each of the circumferential length J1, the radial length J2, and the axial length J3 of the spoke magnet piece 2111b located on the side opposite to the air gap 3 in the radial direction. $I 1 < J 1$ (5) $I 2 < J 2$ (6) $I 3 < J 3$ (7)

That is, in the present example, the plurality of spoke magnet pieces 2111d are obtained by dividing the spoke magnet pieces 2111c of the fourth example on the radial air gap 3 side in the circumferential direction and the axial direction more finely than the spoke magnet piece 2111c. For this reason, the spoke magnet 211d of the present example is divided into the plurality of spoke magnet pieces 2111b and the plurality of spoke magnet pieces 2111d in the radial direction so that the circumferential length I1 of the spoke magnet piece 2111d on a radial inner peripheral side becomes smaller than the circumferential length J1 of the spoke magnet piece 2111b on a radial outer peripheral side. Further, the spoke magnet 211d is divided into the plurality of spoke magnet pieces 2111b and the plurality of spoke magnet pieces 2111d in the radial direction so that the radial length I2 of the spoke magnet piece 2111d on the radial inner peripheral side becomes smaller than the radial length J2 of the spoke magnet piece 2111b on the radial outer peripheral side. Further, the spoke magnet 211d is divided into the plurality of spoke magnet pieces 2111b and the plurality of spoke magnet pieces 2111d in the radial direction so that the axial length I3 of the spoke magnet piece 2111d on the radial inner peripheral side becomes smaller than the axial length J3 of the spoke magnet piece 2111b on the radial outer peripheral side.

In other words, the spoke magnet 211d is divided in the radial direction into the first spoke magnet pieces 2111b and the second spoke magnet pieces 2111d having different circumferential lengths, and the second spoke magnet pieces 2111d are arranged on the radial inner peripheral side with respect to the first spoke magnet pieces 2111b and are divided so that the circumferential length I1 becomes smaller than the circumferential length J1 of the first spoke magnet piece 2111b. Further, the spoke magnet 211d is divided in the radial direction into the first spoke magnet pieces 2111b and the second spoke magnet pieces 2111d having different radial lengths, and the second spoke magnet piece 2111d is arranged on the radial inner peripheral side with respect to the first spoke magnet piece 2111b and is divided so that the radial length I2 becomes smaller than the radial length J2 of the first spoke magnet piece 2111b. Further, the spoke magnet 211d is divided in the radial direction into the first spoke magnet pieces 2111b and the second spoke magnet pieces 2111d having different axial lengths, and the second spoke magnet piece 2111d is arranged on the radial inner peripheral side with respect to the first spoke magnet piece 2111b and is divided so that the axial length I3 becomes smaller than the axial length J3 of the first spoke magnet piece 2111b.

The present example aims to divide the spoke magnet 211d more finely on the radial air gap 3 side (radial inner peripheral side) than on the side opposite to the air gap 3 in the radial direction (radial outer peripheral side), and the second spoke magnet piece 2111d only needs to be divided more finely than the first spoke magnet piece 2111b in at least one of the circumferential direction, the radial direction, and the axial direction. In this case, when the second spoke magnet piece 2111d is divided more finely than the first spoke magnet piece 2111b only in the radial direction, the configuration becomes the same as that of the fourth example. Other configurations can be configured similarly to the first to fourth examples.

By making each of the circumferential length I1, the radial length I2, and the axial length I3 of the spoke magnet piece 2111d located on the radial air gap 3 side smaller than each of the circumferential length J1, the radial length J2, and the axial length J3 of the spoke magnet piece 2111b located on the side opposite to the air gap 3 in the radial direction, eddy current loss of the spoke magnet 211d largely generated on the radial air gap 3 side can be effectively reduced.

On the other hand, since eddy current loss of the spoke magnet piece 2111b located on the side opposite to the air gap 3 in the radial direction is relatively small, there is no need to make each of the circumferential length J1, the radial length J2, and the axial length J3 as small as the spoke magnet piece 2111d located on the radial air gap 3 side.

As a result, by reducing with emphasis particularly eddy current loss largely generated on the radial air gap 3 side of the spoke magnet 211d, an increase in temperature of the permanent magnet 21 caused by the eddy current loss can be suppressed, torque characteristics of the rotating electric machine 100 can be improved, and irreversible demagnetization of the permanent magnet 21 can be suppressed.

### [Example 6]

With reference to FIG. 11, a rotating electric machine 100 according to a sixth example of the present invention will be described. The sixth example can be configured similarly to the fifth example except for the following points. Differences from the fifth example will be mainly described below.

FIG. 11 is a sectional view of a stator 1 and a rotor 2 according to the sixth example. FIG. 11 illustrates a cross section perpendicular to a rotation shaft 20 (see FIG. 1).

In the present example, a magnet holding plate 24 is arranged between a spoke magnet 211d and an air gap 3. The magnet holding plate 24 is arranged so as to cover a surface of the spoke magnet 211d on the radial air gap 3 side and is held by a claw portion 224 extending in the circumferential direction from a tip of a main core 221 on the air gap 3 side. By causing reaction force received from the claw portion 224 due to centrifugal force and electromagnetic force acting on the spoke magnet 211d to be received via the magnet holding plate 24 rather than being directly received by a spoke magnet piece 2111e, damage to the spoke magnet piece 2111e can be avoided. Further, even when the spoke magnet piece 2111e separates from the spoke magnet 211d due to a load of centrifugal force or electromagnetic force, or the spoke magnet piece 2111e chips, coverage by the magnet holding plate 24 makes it possible to prevent the spoke magnet piece 2111e from scattering from the rotor core 22.

The material of the magnet holding plate 24 is preferably nonmagnetic in order to prevent leakage of magnetic flux between magnetic poles. The material of the magnet holding plate 24 is also preferably nonconductive in order to prevent generation of eddy current in the magnet holding plate 24. The magnet holding plate 24 may be configured by, for example, a resin material, or may be configured by fiber-reinforced plastic (FRP) or the like.

The configuration of the present example can be applied to the first to fourth examples in addition to the fifth example.

### [Modifications]

The present invention is not limited to the above-described examples, and various modifications are possible. The examples described above are illustrated in order to explain the present invention in an easily understandable manner, and the present invention is not necessarily limited to including all configurations described. It is also possible to replace part of the configuration of one example with the configuration of another example, and it is also possible to add the configuration of another example to the configuration of one example. It is also possible to delete part of the configuration of each example, or to add or replace another configuration. Modifications possible for the above examples are, for example, as follows.

(1) In each of the above examples, one inverter is connected to one rotating electric machine 100, but a three-phase double winding or an open winding to which a plurality of inverters are connected may be used in order to enhance redundancy of the rotating electric machine 100.
(2) As a material of the permanent magnet 21, a rare-earth sintered magnet is assumed, for example, but another permanent magnet may be used, such as a rare-earth bonded magnet produced by mixing a rare-earth magnetic powder such as samarium iron nitride magnet powder and neodymium magnet powder with an organic binder, or a ferrite magnet.

The rotating electric machine 100 according to the present invention described above has the following features.

(1) In the rotating electric machine 100 including a stator 1 in which a coil 11 is wound around a stator core 12, and a rotor 2 that faces the stator 1 via a predetermined gap 3 and in which spoke magnets 211, 211a, 211b, 211c, 211d magnetized in a circumferential direction and a main pole magnet 212 magnetized in a radial direction are embedded in the rotor core 22,
   the spoke magnets 211, 211a, 211b, 211c, 211d and the main pole magnet 212 are respectively divided into a plurality of magnet pieces 2111, 2111a, 2111b, 2111c, 2111d, 2121 in at least one direction of an axial direction, a circumferential direction, and a radial direction of the rotor 2, and
   a length, in a division direction, of each of the magnet pieces 2111, 2111a, 2111b, 2111c, 2111d of the spoke magnet 211 is shorter than a length, in the division direction, of the magnet piece 2121 of the main pole magnet 212.
(2) The spoke magnet 211 and the main pole magnet 212 are respectively divided into the plurality of magnet pieces 2111, 2121 in the axial direction of the rotor 2, and
   an axial length A of the magnet piece 2111 of the spoke magnet 211 is shorter than an axial length B of the magnet piece 2121 of the main pole magnet 212.
(3) The spoke magnet 211a is divided into the plurality of magnet pieces 2111a in the circumferential direction of the rotor 2, and
   a circumferential length C of the magnet piece 2111a of the spoke magnet 211a is shorter than a circumferential length D of the magnet piece 2121 of the main pole magnet 212.
(4) The spoke magnet 211b is divided into the plurality of magnet pieces 2111b in the radial direction of the rotor 2, and
   a radial length E of the magnet piece 2111b of the spoke magnet 211b is shorter than a radial length F of the magnet piece 2121 of the main pole magnet.
(5) In (4),
   the spoke magnet 211c is divided in the radial direction of the rotor 2 so as to include a first magnet piece 2111b and a second magnet piece 2111c having different radial lengths, and
   a radial length G of the second magnet piece 2111c, among the magnet pieces 2111b, 2111c of the spoke magnet 211, arranged on a side of the gap 3, is shorter than a radial length E of the first magnet piece 2111b arranged on a side opposite to the side of the gap 3.
(6) In (4),
   the spoke magnet 211d is divided in the radial direction of the rotor 2 so as to include a first magnet piece 2111b and a second magnet piece 2111d having different axial lengths, and
   an axial length I3 of the second magnet piece 2111d, among the magnet pieces 2111b, 2111d of the spoke magnet 211, arranged on the side of the gap 3, is shorter than an axial length J3 of the first magnet piece 2111b arranged on the side opposite to the side of the gap 3.
(7) In (4),
   the spoke magnet 211d is divided in the radial direction of the rotor 2 so as to include a first magnet piece 2111b and a second magnet piece 2111d having different circumferential lengths, and
   a circumferential length I1 of the second magnet piece 2111d, among the magnet pieces 2111b, 2111d of the spoke magnet, arranged on the side of the gap 3, is shorter than a circumferential length J1 of the first magnet piece 2111b arranged on the side opposite to the side of the gap 3.
(8) The rotor core 22 has the main core 221 located on the radial side of the gap 3 closer than the main pole magnet 212, a claw portion 224 extending in the circumferential direction from a tip of the main core 221 on the side of the gap 3, and a magnet holding plate 24 arranged between the spoke magnet 211d and the gap 3,
   and
   the magnet holding plate 24 is held by the claw portion 224.

### Reference Signs List

1 stator
2 rotor
10 housing
11 coil
12 stator core
13 connection portion
20 shaft
21 permanent magnet
22 rotor core
23 rotor core holding portion
24 magnet holding plate
30 bearing
40 inverter
41 lead wire
100 rotating electric machine
121 stator back yoke
122 teeth
211, 211a, 211b, 211c, 211d spoke magnet
212 main pole magnet
221 main core
222 back core
223 intermagnet bridge
224 claw portion
2111, 2111a, 2111b, 2111c, 2111d spoke magnet piece
2121 main pole magnet piece

## Claims

1. A rotating electric machine comprising:
a stator in which a coil is wound around a stator core; and
a rotor facing the stator via a predetermined gap and having, embedded in a rotor core, a spoke magnet magnetized in a circumferential direction and a main pole magnet magnetized in a radial direction,
wherein the spoke magnet and the main pole magnet are each divided into a plurality of magnet pieces in at least one direction of an axial direction, a circumferential direction, and a radial direction of the rotor, and
a length, in a division direction, of the magnet piece of the spoke magnet is shorter than a length, in the division direction, of the magnet piece of the main pole magnet.

2. The rotating electric machine according to claim 1,
wherein the spoke magnet and the main pole magnet are each divided into a plurality of magnet pieces in the axial direction of the rotor, and
an axial length of the magnet piece of the spoke magnet is shorter than an axial length of the magnet piece of the main pole magnet.

3. The rotating electric machine according to claim 1,
wherein the spoke magnet is divided into a plurality of magnet pieces in the circumferential direction of the rotor, and
a circumferential length of the magnet piece of the spoke magnet is shorter than a circumferential length of the magnet piece of the main pole magnet.

4. The rotating electric machine according to claim 1,
wherein the spoke magnet is divided into a plurality of magnet pieces in the radial direction of the rotor, and
a radial length of the magnet piece of the spoke magnet is shorter than a radial length of the magnet piece of the main pole magnet.

5. The rotating electric machine according to claim 4,
wherein the spoke magnet is divided in the radial direction of the rotor so as to include a first magnet piece and a second magnet piece having different radial lengths, and
a radial length of the second magnet piece, among the magnet pieces of the spoke magnet, arranged on a side of the gap is shorter than a radial length of the first magnet piece arranged on a side opposite to the side of the gap.

6. The rotating electric machine according to claim 4,
wherein the spoke magnet is divided in the radial direction of the rotor so as to include a first magnet piece and a second magnet piece having different axial lengths, and
an axial length of the second magnet piece, among the magnet pieces of the spoke magnet, arranged on a side of the gap is shorter than an axial length of the first magnet piece arranged on a side opposite to the side of the gap.

7. The rotating electric machine according to claim 4,
wherein the spoke magnet is divided in the radial direction of the rotor so as to include a first magnet piece and a second magnet piece having different circumferential lengths, and
a circumferential length of the second magnet piece, among the magnet pieces of the spoke magnet, arranged on a side of the gap is shorter than a circumferential length of the first magnet piece arranged on a side opposite to the side of the gap.

8. The rotating electric machine according to claim 1,
wherein the rotor core has a main core located on a radial side of the gap closer than the main pole magnet, a claw portion extending in a circumferential direction from a tip of the main core on a side of the gap, and a magnet holding plate arranged between the spoke magnet and the gap, and
the magnet holding plate is held by the claw portion.
